# EUROPEAN PATENT SPECIFICATION

(11) **EP 3 079 241 B1**
(45) Date of publication and mention of the grant of the patent: **08.11.2017**
(21) Application number: 16162783.1
(22) Date of filing: 30.03.2016
(51) Int. Cl.: H02K 15/00, H02K 15/03, H02K 15/16

(54) **CONTROLLED ASSEMBLY OF PERMANENT MAGNET MACHINES**
GESTEUERTE ANORDNUNG VON DAUERMAGNETMASCHINEN
ASSEMBLAGE CONTRÔLÉ DE MACHINES À AIMANT PERMANENT

(30) Priority: 06.04.2015 US 201514679269
(43) Date of publication of application: 12.10.2016
(73) Proprietor: GE Energy Power Conversion Technology Ltd, Rugby Warwickshire CV21 1BU (GB)
(72) Inventor: NIES, Jacob Johannes, 48499 Salzbergen Niedersachsen (DE)
(74) Representative: Serjeants LLP

(56) References cited:
- JP-A- H11 164 529
- JP-A- S55 103 063
- JP-A- 2000 134 836

## Description

### TECHNICAL FIELD

The technical invention relates generally to controlled assembly of permanent magnet machines (PMMs). In particularly, the invention relates to determining an order for inserting magnets in PMMs or other electrical machines.

### BACKGROUND OF THE INVENTION

In an electrical machine such as a PMM, the magnetic field for the synchronous machine may be provided by using permanent magnets made of neodymium-boron-iron, samarium-cobalt, or ferrite on a rotor of the PMM. In some cases, these magnets are mounted on the surface of the rotor core such that the magnetic field is radially directed across an air gap between the rotor and the stator of the machine. In other cases, the magnetic field is axially directed. Alternatively, the magnets are inset into the rotor core surface or inserted in slots just below the rotor core surface.

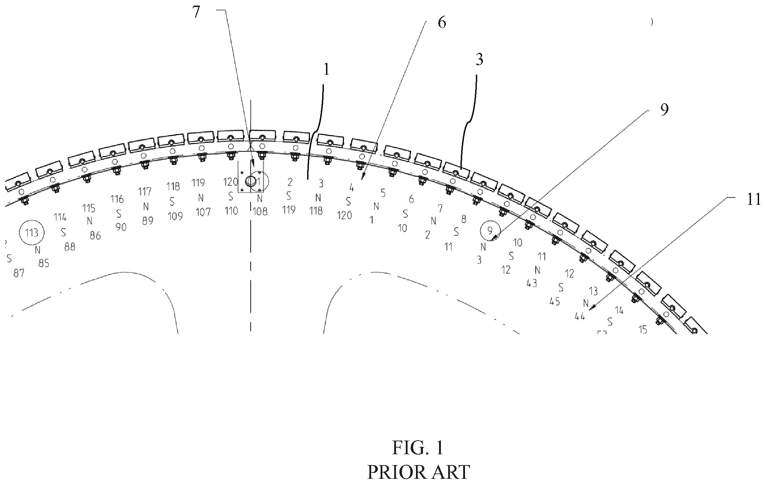

FIG. 1 is an expanded view illustrating a rotor surface of a PMM having magnets mounted thereon using a conventional method. As shown in FIG. 1, the rotor surface 1, has a plurality of magnets 3 inserted thereon in predetermined fixed positions using a current insertion method. Using this conventional method, the positions of the magnets 3 are predetermined based on pole numbers 6 and 7, magnet polarity 9, and pole insertion sequence numbers 11, as shown in FIG 1.

In large electrical machines, the air gap may be inherently diminished by unbalanced magnetic forces. Therefore, the magnets on the rotor and the coils of the stator, opposing each other, may attract each other, therefore causing assembly problems. For example, in an electrical machine where the stator and the rotor are offset, an unwanted force or unbalanced magnetic pull (UMP) may be generated in the direction of the offset. Consequently, the structural stiffness of the electrical machine creates an opposing force in an attempt to react to the unwanted force generated.

The conventional insertion methods fail to dynamically consider the potential offset between the stator and rotor or the unwanted attraction and/or forces (e.g., UMP) which may be generated both during the insertion process and when considering the position in which each magnet is to be inserted.

The document JP 2000-134836 discloses a manufacturing method for a permanent magnet rotor.

### SUMMARY OF THE EMBODIMENTS

The various embodiments of the present disclosure are configured to mitigate the disadvantages of the above-mentioned method, by providing a controlled assembly method and a control system for inserting magnets into an electrical machine which applies a feedback loop during the insertion process to adapt to any offset between the rotor and the stator, and to minimize unwanted attraction and/or forces within the electrical machine.

In one exemplary embodiment, a control system is provided for controlling the insertion of a plurality of magnets within an electrical machine including a stator and a rotor which rotates in relation to the stator around a rotary axis, the control system comprises plurality of sensors which continuously measure the air gap between the rotor and the stator, an encoder which continuously detects an angular position of the rotor, and a processor which receives data from the sensors and the encoder and determines in real-time an insertion order for inserting the plurality of magnets in a surface of the rotor and applies a feedback loop while performing the insertion process to adjust the insertion order based on changes in the data received.

According to an embodiment, the spacing of the air gap may be continuously measured; or the air gap may be continuously measured indirectly e.g., by measuring the back side of the rotor rim and subtracting the thickness of the rim.

In another exemplary embodiment, a control method implemented by computer may be provided. The control method comprises performing a feedback loop including inserting at least one magnet in a rotor of the electrical machine, sensing and measuring, via sensors, a spacing of an air gap between the rotor and a stator of the electrical machine, detecting via an encoder, an angular position of the rotor after inserting the at least one magnet, and processing via a processor, measurement data received from the sensors and the encoder, and determining, in real-time, an insertion order for inserting remaining magnets of the plurality of magnets and thus applying the feedback loop while inserting the plurality of magnets.

The foregoing has broadly outlined some of the aspects and features of various embodiments, which should be construed to be merely illustrative of various potential applications of the disclosure. Other beneficial results can be obtained by applying the disclosed information in a different manner or by combining various aspects of the disclosed embodiments. Accordingly, other aspects and a more comprehensive understanding may be obtained by referring to the detailed description of the exemplary embodiments taken in conjunction with the accompanying drawings, in addition to the scope defined by the claims.

### DESCRIPTION OF THE DRAWINGS

FIG. 1 is an expanded view illustrating a rotor surface of an electrical machine, having a plurality of magnets mounted thereon using a conventional insertion method.
FIG. 2 is schematic illustration of an electrical machine for implementing one or more embodiments of the present invention.
FIG. 3 is a schematic illustrating the placement of sensors of the control system for inserting the permanent magnets in a rotor that can be implemented within one or more embodiments of the present invention.
FIG. 4 is a flow diagram illustration a control method including a feedback loop for inserting a plurality of permanent magnets in a rotor of an electrical machine that can be implemented within one or more embodiments of the present invention.
FIG. 5 is an illustration of magnets being inserted on the rotor of an electrical machine that can be implemented within one or more embodiments of the present invention.
FIG. 6 is a schematic illustrating an example of a computer system that can be implemented within one or more embodiments of the present invention.

The drawings are only for purposes of illustrating preferred embodiments and are not to be construed as limiting the disclosure. Given the following enabling description of the drawings, the novel aspects of the present disclosure should become evident to a person of ordinary skill in the art. This detailed description uses numerical and letter designations to refer to features in the drawings. Like or similar designations in the drawings and description have been used to refer to like or similar parts of embodiments of the invention.

### DETAILED DESCRIPTION OF THE EMBODIMENTS

As required, detailed embodiments are disclosed herein. It must be understood that the disclosed embodiments are merely exemplary of various and alternative forms. As used herein, the word "exemplary" is used expansively to refer to embodiments that serve as illustrations, specimens, models, or patterns. The figures are not necessarily to scale and some features may be exaggerated or minimized to show details of particular components. In other instances, well-known components, systems, materials, or methods that are known to those having ordinary skill in the art have not been described in detail in order to avoid obscuring the present disclosure. Therefore, specific structural and functional details disclosed herein are not to be interpreted as limiting, but merely as a basis for the claims and as a representative basis for teaching one skilled in the art.

The control system and control method according to one or more embodiments of the present invention may be implemented within different electrical machines such as PMMs, permanent magnet generators (PMGs), permanent magnet motors and marine motors, or other suitable electrical machines.

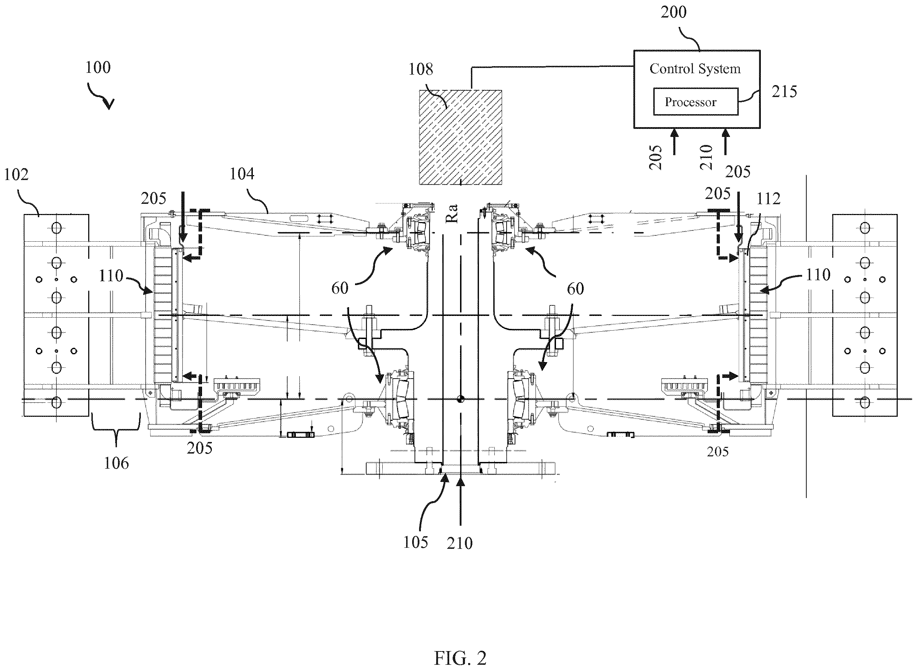

FIG. 2 is a schematic illustration of an electrical machine for implementing one or more embodiments of the present invention. As shown in FIG. 2, the electrical machine 100 inducing a stator 102 and a rotor (e.g., an inner rotor) 104 rotating around a shaft 105 having a dedicated rotary axis Rₐ in relation to the stator 102. The stator 102 may also have a longitudinal axis which aligns with the rotary axis Rₐ of the rotor 104.

Rotation is achieved using bearings 60 as shown. An air gap 106 is located between the inner rotor 104 and the stator 102. An actuator 108 is coupled at the rotary axis Rₐ to facilitate actuation of the rotor 104 in relation to the stator 102. The actuator 108 further controls the radial position of the rotor 104 to the stator 102. The rotor 104 includes a plurality of permanent magnets 110 inserted therein.

The magnets 110 may be inserted into magnet holders (not shown) and mounted on a rotor surface 112, or may be mounted directly on the rotor surface 112 using fastening means (e.g., bolts). If magnet holders are employed, the magnet holders provide a biasing force to secure the magnets 110 therein. The magnet holders may be disposed and divided into sections for ease of handling and installation. The embodiments may be implemented within an electrical machine having an outer stator and an inner rotor as shown. Alternatively, the embodiments can be implemented in an outer rotor having an inner stator or any other type of stator-rotor relationship and is not limited hereto.

A control system 200 according to one or more embodiments of the present invention, comprises a plurality of sensors 205 (e.g., distance sensors) for sensing the spacing and alignment of the air gap 106. The sensors 205 may be disposed in axial positions as indicated by the solid arrows and/or radial positions as indicated by the dashed arrows near the rotor surface 112 of the rotor 104. Alternatively, the sensors 205 may be mounted on the stator 102 or in between the rotor 104 and the stator 102. Alternatively, the sensors may measure other quantities like strain or force.

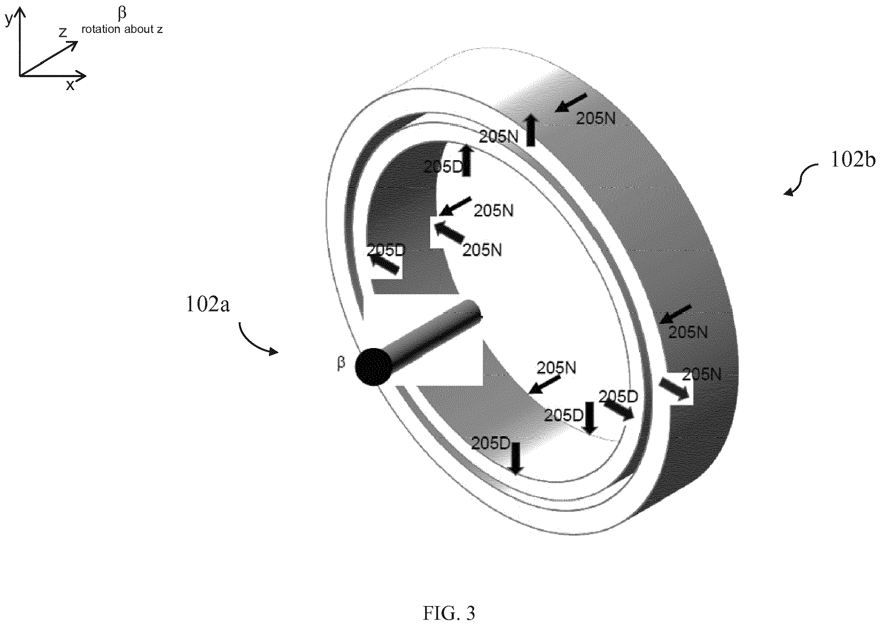

The sensors 205 may be disposed on a driven side 102a or a non-driven side 102b (as depicted in FIG. 3) of the stator 102. The sensors 205 are connected and controlled by the control system 200 to measure the spacing of the air gap 106 and determine structural stiffness of the electrical machine 100 in multiple directions. According to one or more embodiments, the sensors 205 continuously monitor the movement of the rotor 104 in relation to the stator 102 to determine changes in movement and may optionally determine stiffness of the electrical machine 100.

Reflectors may be attached at points around the stator 102 on the driven and non-driven faces for measuring the stator face dimensions. According to other embodiments, proximity probes (e.g., capacitive, inductive, or optical) may be employed. Light transmission through the air gap 106, from the driven side of the stator 102 using a light emitting element (e.g., a light emitting diode (LED)), may be measured with a photodetector. The photodetector can be controlled by the control system 200 to measure the spacing of the air gap 106.

In yet other embodiments, laser reflection off the rotor 104 may be monitored using a laser fixed to a surface to emit at a low incident angle from the driven side of the stator 102. Measurements of a position of a laser spot, on the non-driven side 102b, after one or more laser reflections are detected within the air gap 106, may be obtained. Besides the contact-less devices listed above, measurement devices with a spring-loaded pin may be used to determine the relative position between rotor and stator.

The control system 200 further includes an encoder 210 located at the shaft 105 to detect an angular position of the rotor 104 relative to the stator 102 while inserting the plurality of magnets 110 in the rotor 104. By definition, the angular position defines which magnet position on the rotor 104 is in front of the magnet insertion bay or location and the distance away from it. The encoder 210 may be an absolute encoder or any other type of encoder suitable for the purposes set forth herein.

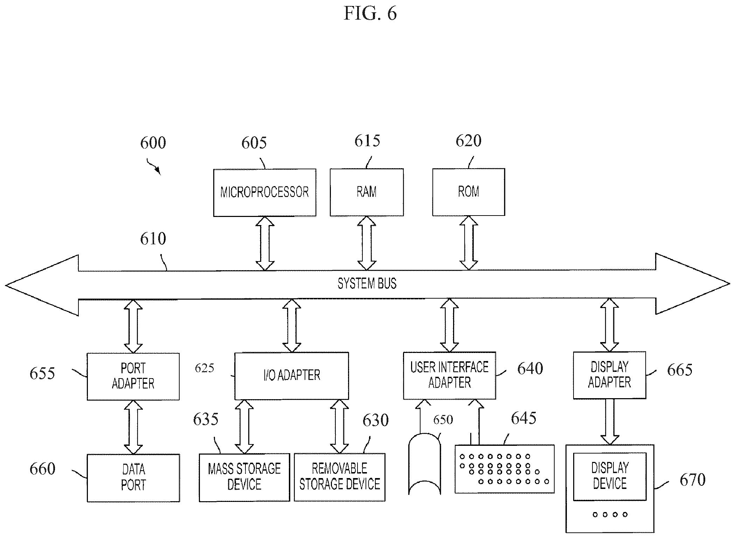

The control system 200 also includes a processor 215 (605 as depicted in FIG. 6, for example), or data processing unit (DPU), for receiving the measurements detected by the sensors 205 and the encoder 210 and processing them.

An insertion mechanism (not shown) is also provided for performing the insertion of the magnets 110 in the rotor 104. The insertion mechanism is arranged at a location which is accessible, for example, a three, six or nine o'clock position depending on where the loading of the magnets 110 is best supported by scaffolding and logistics of the magnets. The insertion mechanism may be further controlled by the processor 605.

The processor 215, in accordance with the embodiments, further performs a technique to determine, in real-time, an insertion order for inserting the plurality of magnets 110 in the rotor surface 112 of the rotor 104. The technique of the embodiments is responsive to measurement data received from the sensors 205, the encoder 210, and the placement of at least one magnet 110 in the rotor 104. The processor 215 applies a feedback loop for adjusting the insertion order in real-time to control insertion of the plurality of magnets 110 in the rotor 104 (e.g., at the rotor surface 112).

For example, after inserting 4 or 5 magnets 110, based on actual displacement measurements, spacing of the air gap, information of already-mounted magnets and their position, and additional measurement data received in real-time at the processor 215, the processor 215 can adjust the insertion order to offset unwanted forces (e.g., UMP). This adjustment is accomplished by applying magnets 110 at an opposing side of the rotor 104. The processor 215 repeats the feedback loop until all of the plurality of magnets 110 have been inserted in the rotor 104.

The measurement data can be displayed, and is viewable to user, at a display device (e.g., 670 as depicted in FIG. 6) of the control system 200.

Based on the measurement data received, the control system 200 may consider several variables when determining the insertion order. These variables can include, for example, magnet-to-magnet variation of strength in magnetic attraction, nonlinearity of the magnetic attraction verses any offsets, bearing clearances, deviations in structural stiffness and tolerances on machine parts and assembly thereof. As understood to one of skill in the art, other suitable variables can be used.

According to one or more embodiments, the control system 200 can determine the insertion order based on historical data stored in a storage device (e.g., 635 shown in FIG. 6) therein. The historical data can include data associated with magnet type, recorded UMPs, or recorded distances between rotor and stator and any other type of historical data.

FIG. 3 is a schematic illustrating the placement of sensors of the control system for inserting the permanent magnets on the rotor, according to the embodiments. As shown in FIG. 3, the stator 102 is disposed and includes the driven side 102a which is a front side facing the rotor 104 and the non-driven side 102b, which is a rear or outer side of the stator 102. A plurality of sensors 205 can be disposed in various directions along the x, y, and z axes, as indicated by the respective arrows for driven-side sensors 205D and nondriven-side sensors 205N. There may be symmetrical and non-symmetrical machines, both in length direction as well as non-symmetry in circumferential directions (e.g., with a stator 102 lower half having feet to connect to a foundation and the stator 102 top half mounted on a top of the lower half without foundation attachment).

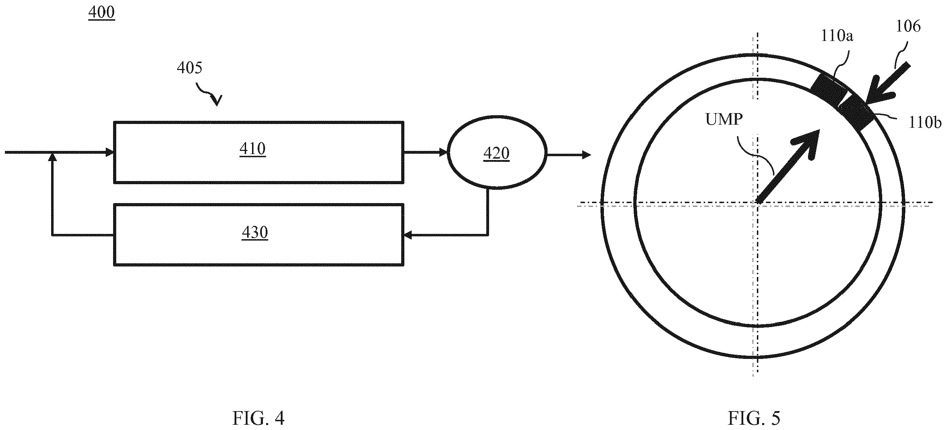

A control method for inserting the magnets 110 in the rotor 104 is described below, with reference to FIGS. 4 and 5.

FIG. 4 is a flow diagram illustration a control method comprising a feedback loop for inserting a plurality of magnets on the rotor of the electrical machine, according to the embodiments. As shown in FIG. 4, the method 400 performs a feedback loop 405 that begins at operation 410 where the control system 200 controls the insertion mechanism to insert at least one magnet 110 in the rotor 104.

The process then continues to operation 420 where the sensors 205 sense and measure the spacing of the air gap 106 between the rotor 104 and the stator 102. Other measurements are also performed, such as structural stiffness in multiple directions, e.g. by exerting a known force into the system determining the response to the applied force, thus determining the stiffness. As a variant of that, the system may prescribe one or more magnet configurations that have known levels of unbalanced magnetic pull, that will be rotated around in order to observe the system response in several directions. Further, in operation 420, the encoder 210 continuously detects an angular position of the rotor 104, and the insertion position of each inserted magnet 110. The process continues to operation 430.

In operation 430 the control system 200 receives the measurement data from the sensors 205 and the encoder 210. The processing unit 215 processes the measurement data and defines an insertion order best suited for inserted the remaining magnets 110 of the plurality of magnets. That is, the control system 200 reads the sensors 205, calculates the next sequence of insertion, and informs the operator of the insertion mechanism which magnet to insert next in the sequence. The control system 200 may further control actuation e.g., the rotation of the rotor 104 between two insertions or motion of the magnet into its insertion position.

The control system 200 performs the feedback loop 405 in real-time such that the insertion order may be adjusted (i.e., re-calculated) during the insertion process. This process facilitates adapting to any changes in movement of the rotor 104 and the stator 102, relative to each other, and any changes in structural stiffness in multiple directions of the electrical machine 100.

The feedback loop can be repeated, depending on the continuous monitoring of the spacing of the air gap 106, and the insertion positions already filled with magnets 110. According to the embodiments, the feedback loop can be set to occur at different intervals of time, or as otherwise desired by a user of the control system 200.

In the illustrated embodiments, the insertion order can be determined after rotating the rotor 104 at least one revolution and then measuring the spacing (or distance) of the air gap 106 to determine any closure or stiffness of the air gap 106 relative to the stator 102. By determining the structural stiffness and the measured air gap 106, an optimum insertion order for inserting the magnets 110 may be determined. As noted above, the system may prescribe one or more magnet configurations that have a known levels of unbalanced magnetic pull that will be rotated around in order to observe the system response in several directions. The optimization can be focused on a minimum amount of rotation between magnet insertion, a minimum amount of air gap closure, a minimum overall assembly time, other factors, or a combination thereof.

FIG. 5 is an illustration of magnets mounted on the rotor that can be implemented within one or more embodiments of the present invention. In FIG. 5, the rotor 104 is shown with two magnets 110a and 110b inserted therein and the forces of the UMP and the actual measured air gap 106 opposing each other. The control system 200 takes into account the UMP and the measured air gap 106 to determine and adjust the insertion order during the insertion process of the magnets 110a and 110b.

FIG. 6 is a schematic illustrating an example of a computer system that can be implemented within one or more embodiments of the present invention. The control system 200 may be implemented within the computer system 600 as shown in FIG. 6. The computer system 600 includes at least one microprocessor or central processing unit (CPU) 605.

The CPU 605 is interconnected via a system bus 610 to a random access memory (RAM) 615, a read-only memory (ROM) 620, and an input/output (I/O) adapter 625. The I/O 625 connects a removable data and/or program storage device 630. Also included are a mass data and/or program storage device 635, a user interface adapter 640 for connecting a keyboard 645 and a mouse 650, a port adapter 655 for connecting a data port 660, and a display adapter 665 for connecting a display device 670.

The ROM 620 contains the basic operating system for the computer system 600. The operating system may alternatively reside in the RAM 615 or elsewhere, as is known in the art. Examples or removable data and/or program storage device 630 include magnetic media such as floppy drives and tape drives and optical media such as CD ROM drives.

Examples of mass data and/or program storage device 635 include hard disk drives and non-volatile memory, such as flash memory. In addition to the keyboard 645 and the mouse 650, other user input devices such as trackballs, writing tablets, pressure pads, microphones, light pens, and position sensing screen displays may be connected to user the user interface 640. Examples of display devices include cathode-ray tubes (CRT) and liquid crystal displays (LCD).

Signals from sensor 205 and the encoder 210 (as shown in Fig. 2) are input into the data port 660 shown.

The display device 670 may display proposed and alternative insertion schemes, a summary of decision data on insertion schemes, estimated time(s) to complete the magnet insertions, margin to maximum applied UMP, estimated deformations, graphical and tabular indications of direct measured values or raw data, geometrical re-calculation of such raw data being calibrated (offset), shown in different coordinate systems (angles instead of linear displacements), calculated or measured forces.

A computer program with an appropriate application interface may be created by one of skill in the art and stored on the system or a data and/or program storage device to simplify the practicing the embodiments. In operation, information for or the computer program, created to execute the embodiments, is loaded on the appropriate removable data and/or program storage device 630. The information is fed through data port 660, or typed in using the keyboard 645.

In view of the above, the present method embodiment may therefore take the form of a computer or controller implemented processes and apparatuses for practicing those processes. This disclosure can also be embodied in the form of computer program code containing instructions embodied in tangible media, such as floppy diskettes, CD ROMs, hard drives, or any other computer-readable storage medium, wherein, when the computer program code is loaded into and executed by a computer or controller, the computer becomes an apparatus for practicing the embodiments.

This disclosure may also be embodied in the form of computer program code or signal, for example, whether stored in a storage medium, loaded into and/or executed by a computer or controller, or transmitted over some transmission medium, such as over electrical wiring or cabling, through fiber optics, or via electromagnetic radiation, wherein, when the computer program code is loaded into and executed by a computer, the computer becomes an apparatus for practicing the invention.

When implemented on a general-purpose microprocessor, the computer program code segments configure the microprocessor to create specific logic circuits. A technical effect of the executable instructions is to implement the exemplary method described above.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A control system (200) for inserting a plurality of magnets (110) within an electrical machine (100), the control system (200) comprising:
a plurality of sensors (205) configured to continuously sense an air gap (106) between a rotor (104) and a stator (102) of the electrical machine (100); and
a processor (215; 605) configured to process data received from the plurality of sensors (205) after at least one magnet has been inserted, and to determine in real-time, an insertion order for inserting the plurality of magnets (110);
wherein the control system (200) performs a feedback loop during the insertion process; and
wherein the insertion order is adjusted based on changes in the data received.

2. A control system (200) according claim 1, further comprising an encoder (210), optionally an absolute encoder, the encoder (210) configured to continuously detect an angular position of the rotor (104), wherein the processor (215; 605) further determines the insertion process based on the detected angular position.

3. A control system (200) according to claim 2, wherein the encoder (210) is further configured to detect an insertion position of the at least one magnet after insertion.

4. A control system (200) according to any preceding claim, wherein the plurality of sensors (205) are disposed at axial and/or radial positions along a surface of the rotor (104) and comprise a sensing direction along x, y and z axes.

5. A control system (200) according to any preceding claim, wherein the plurality of sensors (205) are disposed at a driven side (102a) and/or a non-driven side (102b) of the stator (102) and comprise a sensing direction along x, y and z axes.

6. A control system (200) according to any preceding claim, wherein the plurality of sensors (205) are further configured to determine structural stiffness of the electrical machine (100) in multiple directions.

7. A control method to be implemented by computer including a feedback loop comprising:
inserting at least one magnet (110) in a rotor (104) of the electrical machine (100);
continuously sensing, via sensors (205), an air gap (106) between the rotor (104) and a stator (102) of the electrical machine (100) after inserting the at least one magnet; and
processing, via a processor (215; 605), data received from the sensors (205) and determining, in real-time, an insertion order for inserting remaining magnets of a plurality of magnets (110), and applying the feedback loop while inserting the plurality of magnets (110).

8. A control method according to claim 7, further comprising repeating the feedback loop at different time intervals.

9. A control method according to claim 7 or claim 8, further comprising initially determining the insertion order after rotating the rotor (104) at least one revolution and measuring a spacing of the air gap (106).

10. A control method according to any of claims 7 to 9, further comprising:
continuously detecting, via an encoder (210), an angular position of the rotor (104), and adjusting the insertion process based on the angular position detected.

11. A control method according to claim 10, further comprising:
detecting, via the encoder (210), an insertion position of the at least one magnet (110) after insertion.

12. A control method according to any of claims 7 to 11, further comprising:
repeatedly performing the feedback loop in real-time, to adjust the insertion order during the insertion process in order to adapt to any changes in movement of the rotor (104) and the stator (102) relative to each other.

13. A control method according to any of claims 7 to 12, further comprising:
determining, via the plurality of sensors (205), structural stiffness of the electrical machine (100) in multiple directions.

14. A control method according to any of claims 7 to 13, further comprising:
determining, via the processor (215; 605), the insertion order based on historical data and current measured data.

15. A computer program product for implementing a control method including a feedback loop for inserting a plurality of magnets in an electrical machine, by computer, comprising:
inserting at least one magnet (110) in a rotor (104) of the electrical machine (100);
continuously sensing, via sensors (205), an air gap (106) between the rotor (104) and a stator (102) of the electrical machine (100) after inserting the at least one magnet; and
processing, via a processor (215; 605), data received from the sensors (205) and determining, in real-time, an insertion order for inserting remaining magnets of a plurality of magnets (110), and applying the feedback loop while inserting the plurality of magnets (110);
wherein the control method optionally further comprises:
continuously detecting, via an encoder (210), an angular position of the rotor, and adjusting the insertion process based on the angular position detected; and/or
repeatedly performing the feedback loop in real-time, to adjust the insertion order during the insertion process in order to adapt to any changes in movement of the rotor and the stator relative to each other.

## Patentansprüche

1. Steuersystem (200) zur Einfügung mehrerer Magnete (110) innerhalb einer elektrischen Maschine (100), wobei das Steuersystem (200) aufweist:
mehrere Sensoren (205), die eingerichtet sind, um einen Luftspalt (106) zwischen einem Rotor (104) und einem Stator (102) der elektrischen Maschine (100) kontinuierlich zu erfassen; und
einen Prozessor (215; 605), der eingerichtet ist, um Daten zu verarbeiten, die von den mehreren Sensoren (205) empfangen werden, nachdem wenigstens ein Magnet eingefügt worden ist, und um in Echtzeit eine Einfügungsreihenfolge zur Einfügung der mehreren Magnete (110) zu bestimmen;
wobei das Steuersystem (200) während des Einfügungsprozesses eine Rückkopplungsschleife durchführt; und
wobei die Einfügungsreihenfolge basierend auf Änderungen in den empfangenen Daten angepasst wird.

2. Steuersystem (200) nach Anspruch 1, das ferner einen Kodierer (210), optional einen Absolutkodierer, aufweist, wobei der Kodierer (210) eingerichtet ist, um eine Winkelposition des Rotors (104) kontinuierlich zu erfassen, wobei der Prozessor (215; 605) ferner den Einfügungsprozess auf der Basis der erfassten Winkelposition bestimmt.

3. Steuersystem (200) nach Anspruch 2, wobei der Kodierer (210) ferner eingerichtet ist, um eine Einfügungsposition des wenigstens einen Magneten nach einer Einfügung zu erfassen.

4. Steuersystem (200) nach einem beliebigen vorhergehenden Anspruch, wobei die mehreren Sensoren (205) an axialen und/oder radialen Positionen entlang einer Oberfläche des Rotors (104) angeordnet sind und eine Erfassungsrichtung entlang von x-, y- und z-Achsen aufweisen.

5. Steuersystem (200) nach einem beliebigen vorhergehenden Anspruch, wobei die mehreren Sensoren (205) auf einer Abtriebsseite (102a) und/oder einer Nicht-Abtriebsseite (102b) des Stators (102) angeordnet sind und eine Erfassungsrichtung entlang von x-, y- und z-Achsen aufweisen.

6. Steuersystem (200) nach einem beliebigen vorhergehenden Anspruch, wobei die mehreren Sensoren (205) ferner eingerichtet sind, um eine strukturelle Steifigkeit der elektrischen Maschine (100) in mehreren Richtungen zu bestimmen.

7. Durch einen Computer umzusetzendes Steuerverfahren, das eine Rückkopplungsschleife enthält, die aufweist:
Einfügen wenigstens eines Magneten (110) in einen Rotor (104) der elektrischen Maschine (100);
kontinuierliches Erfassen, mittels Sensoren (205), eines Luftspaltes (106) zwischen dem Rotor (104) und einem Stator (102) der elektrischen Maschine (100) nach einer Einfügung des wenigstens einen Magneten; und
Verarbeiten, mittels eines Prozessors (215; 605), von Daten, die von den Sensoren (205) empfangen werden, und Bestimmen, in Echtzeit, einer Einfügungsreihenfolge zur Einfügung restlicher Magnete von mehreren Magneten (110) und Anwenden der Rückkopplungsschleife, während die mehreren Magnete (110) eingefügt werden.

8. Steuerverfahren nach Anspruch 7, das ferner ein Wiederholen der Rückkopplungsschleife in unterschiedlichen Zeitintervallen aufweist.

9. Steuerverfahren nach Anspruch 7 oder Anspruch 8, das ferner ein anfängliches Bestimmen der Einfügungsreihenfolge nach einer Drehung des Rotors (104) um wenigstens eine Umdrehung und Messen eines Abstands des Luftspaltes (106) aufweist.

10. Steuerverfahren nach einem beliebigen der Ansprüche 7 bis 9, das ferner aufweist:
kontinuierliches Erfassen, mittels eines Kodierers (210), einer Winkelposition des Rotors (104) und Anpassen des Einfügungsprozesses basierend auf der erfassten Winkelposition.

11. Steuerverfahren nach Anspruch 10, das ferner aufweist:
Erfassen, mittels des Kodierers (210), einer Einfügungsposition des wenigstens einen Magneten (110) nach einer Einfügung.

12. Steuerverfahren nach einem beliebigen der Ansprüche 7 bis 11, das ferner aufweist:
wiederholtes Durchführen der Rückkopplungsschleife in Echtzeit, um die Einfügungsreihenfolge während des Einfügungsprozesses anzupassen, um eine Anpassung an jegliche Änderungen bei der Bewegung des Rotors (104) und des Stators (102) relativ zueinander vorzunehmen.

13. Steuerverfahren nach einem beliebigen der Ansprüche 7 bis 12, das ferner aufweist:
Bestimmen, mittels der mehreren Sensoren (205), einer strukturellen Steifigkeit der elektrischen Maschine (100) in mehreren Richtungen.

14. Steuerverfahren nach einem beliebigen der Ansprüche 7 bis 13, das ferner aufweist:
Bestimmen, mittels des Prozessors (215; 605), der Einfügungsreihenfolge auf der Basis von historischen Daten und momentanen Messdaten.

15. Computerprogrammprodukt zur Implementierung eines Steuerverfahrens, das eine Rückkopplungsschleife zur Einführung mehrerer Magnete in einer elektrischen Maschine enthält, durch einen Computer, das aufweist:
Einfügen wenigstens eines Magneten (110) in einen Rotor (104) der elektrischen Maschine (100);
kontinuierliches Erfassen, mittels Sensoren (205), eines Luftspaltes (106) zwischen dem Rotor (104) und einem Stator (102) der elektrischen Maschine (100) nach einer Einfügung des wenigstens einen Magneten; und
Verarbeiten, mittels eines Prozessors (215; 605), von Daten, die von den Sensoren (205) empfangen werden, und Bestimmen, in Echtzeit, einer Einfügungsreihenfolge zur Einfügung restlicher Magnete von mehreren Magneten (110) und Anwenden der Rückkopplungsschleife, während die mehreren Magnete (110) eingefügt werden;
wobei das Steuerverfahren optional ferner aufweist:
kontinuierliches Erfassen, mittels eines Kodierers (210), einer Winkelposition des Rotors (104) und Anpassen des Einfügungsprozesses basierend auf der erfassten Winkelposition; und/oder
wiederholtes Durchführen der Rückkopplungsschleife in Echtzeit, um die Einfügungsreihenfolge während des Einfügungsprozesses anzupassen, um eine Anpassung an jegliche Änderungen bei der Bewegung des Rotors (104) und des Stators (102) relativ zueinander vorzunehmen.

## Revendications

1. Système de commande (200) permettant d'insérer une pluralité d'aimants (110) dans une machine électrique (100), le système de commande (200) comprenant :
une pluralité de capteurs (205) configurés pour mesurer en continu un entrefer (106) entre un rotor (104) et un stator (102) de la machine électrique (100) ; et
un processeur (215 ; 605) configuré pour traiter des données envoyées par la pluralité de capteurs (205) après qu'au moins un aimant a été inséré, et pour déterminer en temps réel un ordre d'insertion pour insérer la pluralité d'aimants (110) ;
dans lequel le système de commande (200) réalise une boucle d'asservissement pendant le processus d'insertion ; et
dans lequel l'ordre d'insertion est ajusté en fonction de changements intervenant dans les données reçues.

2. Système de commande (200) selon la revendication 1, comprenant en outre un codeur (210), éventuellement un codeur absolu, le codeur (210) étant configuré pour détecter en continu une position angulaire du rotor (104), dans lequel le processeur (215 ; 605) détermine en outre le processus d'insertion en se basant sur la position angulaire détectée.

3. Système de commande (200) selon la revendication 2, dans lequel le codeur (210) est en outre configuré pour détecter une position d'insertion dudit au moins un aimant après l'insertion.

4. Système de commande (200) selon l'une quelconque des revendications précédentes, dans lequel les capteurs (205) sont placés dans des positions axiales et/ radiales le long d'une surface du rotor (104) et comprennent une direction de détection le long d'axes x, y et z.

5. Système de commande (200) selon l'une quelconque des revendications précédentes, dans lequel les capteurs (205) sont placés d'un côté entraîné (102a) et/ou d'un côté non entraîné (102b) du stator (102) et comprennent une direction de détection le long d'axes x, y et z.

6. Système de commande (200) selon l'une quelconque des revendications précédentes, dans lequel les capteurs (205) sont configurés en outre pour déterminer la rigidité structurelle de la machine électrique (100) dans plusieurs directions.

7. Procédé de commande destiné à être mis en oeuvre par un ordinateur comportant une boucle d'asservissement comprenant les opérations suivantes :
insérer au moins un aimant (110) dans un rotor (104) de la machine électrique (100) ;
mesurer en continu, au moyen de capteurs (205), un entrefer (106) entre le rotor (104) et un stator (102) de la machine électrique (100) après l'insertion dudit au moins un aimant ; et
traiter, au moyen d'un processeur (215 ; 605), des données provenant des capteurs (205) et déterminer, en temps réel, un ordre d'insertion pour insérer les aimants restants d'une pluralité d'aimants (110), et appliquer la boucle d'asservissement tout en insérant les aimants (110).

8. Procédé selon la revendication 7, comprenant en outre la répétition de la boucle d'asservissement à différents intervalles de temps.

9. Procédé selon la revendication 7 ou 8, comprenant en outre la détermination initiale de l'ordre d'insertion après avoir fait tourner le rotor (104) d'au moins un tour et avoir mesuré un espacement de l'entrefer (106).

10. Procédé selon l'une quelconque des revendications 7 à 9, comprenant en outre :
la détection en continu, par l'intermédiaire d'un codeur (210), d'une position angulaire du rotor (104), et l'ajustement du processus d'insertion en fonction de la position angulaire détectée.

11. Procédé selon la revendication 10, comprenant en outre :
la détection, par l'intermédiaire du codeur (210), d'une position d'insertion dudit au moins un aimant (110) après l'insertion.

12. Procédé selon l'une quelconque des revendications 7 à 11, comprenant en outre :
la réalisation répétée de la boucle d'asservissement en temps réel, pour ajuster l'ordre d'insertion pendant le processus d'insertion afin de s'adapter à tout changement dans le mouvement du rotor (104) et du stator (102) l'un par rapport à l'autre.

13. Procédé selon l'une quelconque des revendications 7 à 12, comprenant en outre :
la détermination, par l'intermédiaire de la pluralité de capteurs (205), de la rigidité structurelle de la machine électrique (100) dans plusieurs directions.

14. Procédé selon l'une quelconque des revendications 7 à 13, comprenant en outre :
la détermination, par l'intermédiaire du processeur (215 ; 605), de l'ordre d'insertion d'après des données historiques et des données de mesure courantes.

15. Produit de programme informatique permettant de mettre en oeuvre un procédé de commande comportant une boucle d'asservissement pour insérer une pluralité d'aimants dans une machine électrique, au moyen d'un ordinateur, comprenant :
l'insertion d'au moins un aimant (110) dans un rotor (104) de la machine électrique (100) ;
la mesure en continu, au moyen de capteurs (205), d'un entrefer (106) entre le rotor (104) et un stator (102) de la machine électrique (100) après insertion dudit au moins un aimant ; et
le traitement, par l'intermédiaire d'un processeur (215 ; 605), de données envoyées par les capteurs (205) et la détermination, en temps réel, d'un ordre d'insertion pour insérer les aimants restants d'une pluralité d'aimants (110), et l'application de la boucle d'asservissement pendant l'insertion de la pluralité d'aimants (110) ;
dans lequel le procédé de commande comprend éventuellement en outre :
la détection en continu, par l'intermédiaire d'un codeur (210), d'une position angulaire du rotor, et l'ajustement du processus d'insertion en fonction de la position angulaire détectée ; et/ou
la réalisation répétée de la boucle d'asservissement en temps réel, pour ajuster l'ordre d'insertion pendant le processus d'insertion afin de s'adapter à tout changement dans le mouvement du rotor et du stator l'un par rapport à l'autre.
